# EUROPEAN PATENT APPLICATION

(11) **EP 4 475 627 A1**
(43) Date of publication of application: **11.12.2024**
(21) Application number: 23749591.6
(22) Date of filing: 24.01.2023
(51) Int. Cl.: H04W 92/20, H04W 24/04, H04W 40/02

(54) **CONTROL DEVICE, CONTROL METHOD, AND PROGRAM**

(30) Priority: 01.02.2022 JP 2022014440
(71) Applicant: CANON KABUSHIKI KAISHA, Tokyo 146-8501 (JP)
(72) Inventor: CHUREI, Koji, Tokyo 146-8501 (JP)
(74) Representative: Canon Europe Limited
(86) International application number: PCT/JP2023/002043
(87) International publication number: WO 2023/149275

(57) **Abstract**

A control apparatus that manages communication of a cellular communication standard defined by the Third Generation Partnership Project (3GPP) monitors, of a first communication path managed by the control apparatus, a communication path from the control apparatus to a relay device included in the first communication path, and obtaining first status information regarding the communication path, and, in a case where the relay device is included in a second communication path managed by another control apparatus different from the control apparatus, obtains, from the other control apparatus, second status information regarding, of the second communication path, a communication path from the other control apparatus to the relay device.

## Description

### TECHNICAL FIELD

The present invention relates to a communication path state recognition technique in relay transmission.

### BACKGROUND ART

In the Third Generation Partnership Project (3GPP), Integrated Access and Backhaul (IAB) that integrates access lines and backhaul lines is being standardized (see PTL 1). In IAB, a radio resource used for an access line between a base station and User Equipment (UE) is also used for a backhaul line. For example, a radio resource of the millimeter wave band such as the 28-GHz band can be used in IAB. By using IAB, a relay device (IAB node) can relay communication between a base station device (IAB donor) and user equipment by a radio channel. Compared to using a line such as an optical fiber, the area coverage can be widened at low cost.

However, a radio wave of the millimeter wave band may attenuate strongly depending on weather conditions, and may not maintain communication owing to an obstacle present on a path through which the radio wave propagates because of the straightness of the radio wave. When the millimeter wave band is used in a radio link set between an IAB donor and an IAB node or between two IAB nodes, a Radio Link Failure (RLF) may occur to temporarily inhibit communication in the radio link. To solve this, the IAB framework can provide the redundancy of topology, and an IAB node can set, for example, links for backhaul communication between a plurality of parent nodes. Note that a "parent node" here is a node connected to a side (upstream side) close to a core network among nodes (IAB donors or IAB nodes) directly connected on a communication path. Note that a node connected to a side (downstream side) far from a core network among IAB nodes directly connected on a communication path can be called a "child node".

In 3GPP, an IAB node called a boundary IAB node (or a boundary node) is being examined. The boundary IAB node is an IAB node connected to two or more parent nodes connected to different IAB donors. Control of the boundary IAB node is executed by a single IAB donor. Note that the IAB donor manages a network formed by an IAB node directly connected to the IAB donor or connected via another IAB node. The network managed by the IAB donor will be called an IAB network hereinafter. Another IAB node connected on the downstream side of the boundary IAB node is connected to the IAB network managed by the IAB donor that controls the boundary IAB node.

### CITATION LIST

### PATENT LITERATURE

PTL 1: Japanese Patent Laid-Open No. 2018-525874

### SUMMARY OF INVENTION

### TECHNICAL PROBLEM

In communication of equipment connected to a boundary IAB node or an IAB node on the downstream side of the boundary IAB node, IAB networks managed by two or more IAB donors connected to the boundary IAB node can be used concurrently. For example, when an RLF occurs in an IAB network managed by an IAB donor that controls the boundary IAB node, another IAB network free from an RLF can be used to efficiently perform communication.

However, the IAB donor can recognize the state of a communication path within the IAB network managed by the IAB donor, but cannot recognize the state of a communication path within an IAB network managed by another IAB donor.

### SOLUTION TO PROBLEM

The present invention provides a technique of enabling efficient recognition of the states of a plurality of communication paths in relay transmission.

According to one aspect of the present invention, a control apparatus that manages communication of a cellular communication standard defined by the Third Generation Partnership Project (3GPP) comprises monitoring means for monitoring, of a first communication path managed by the control apparatus, a communication path from the control apparatus to a relay device included in the first communication path, and obtaining first status information regarding the communication path, and obtaining means for, in a case where the relay device is included in a second communication path managed by another control apparatus different from the control apparatus, obtaining, from the other control apparatus, second status information regarding, of the second communication path, a communication path from the other control apparatus to the relay device.

### ADVANTAGEOUS EFFECTS OF INVENTION

According to the present invention, the states of a plurality of communication paths in relay transmission can be efficiently recognized.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2 is a block diagram showing an example of the hardware configuration of an IAB donor;
Fig. 3 is a block diagram showing an example of the functional configuration of the IAB donor;
Fig. 4 is a chart showing an example of the sequence of setting processing regarding a boundary IAB node;
Fig. 5 is a flowchart showing an example of the sequence of processing when announcing status information of a communication path;
Fig. 6 is a view showing an example of the structure of status information of a communication path; and
Fig. 7 is a flowchart showing an example of the sequence of processing when selecting a communication path.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (Configuration of Wireless Communication System)

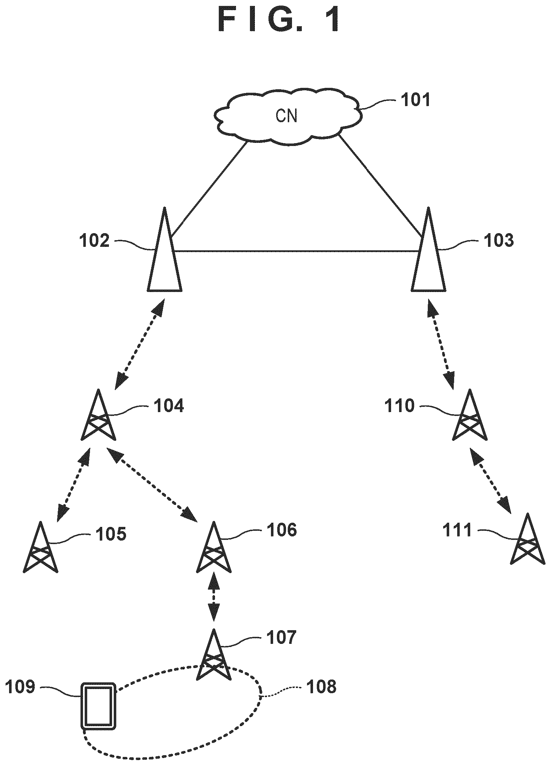

Fig. 1 shows an example of the configuration of a wireless communication system according to an embodiment. The wireless communication system in Fig. 1 is constituted including a relay transmission network compliant with the Integrated Access and Backhaul (IAB) regulations in the Third Generation Partnership Project (3GPP). In the IAB relay transmission network, wireless communication in which an access line and a backhaul line are integrated is performed. The IAB relay transmission network will be called an IAB network hereinafter. The IAB network is constituted including IAB donors (for example, IAB donors 102 and 103), and IAB nodes (for example, IAB nodes 104 to 107, and IAB nodes 110 and 111). Relay transmission via the IAB donors and the IAB nodes provides a communication service to equipment (for example, equipment 109) staying in an area (for example, an area 108) provided by any node (IAB donor or IAB node). Note that the configuration in Fig. 1 is merely an example, and more IAB donors, more IAB nodes, and more equipment terminals can exist, as a matter of course.

An IAB donor handles an IAB node as equipment, establishes a connection, and then performs settings based on Backhaul Adaptation Protocol (BAP). Upon completion of the settings, the IAB node functions as a relay device. Note that the IAB donor can accommodate a plurality of IAB nodes. In the example of Fig. 1, the IAB donor 102 accommodates the IAB nodes 104 to 107, and the IAB donor 103 accommodates the IAB nodes 110 and 111. Note that a plurality of IAB nodes can be directly connected so that, for example, the IAB node 111 is connected on the downstream side of the IAB node 110. A plurality of IAB nodes may be concurrently connected to a common IAB node (or IAB donor) so that the IAB nodes 105 and 106 are connected on the downstream side of the IAB node 104. An IAB donor is constituted to be connectable to a Core Network (CN 101) using, for example, a line. The IAB donor and the core network can be connected by, for example, an Internet Protocol (IP) network. Note that communication from the IAB-based core network to each IAB node will be called backhaul communication in distinction from communication via an access line between an IAB donor or IAB node and equipment.

In backhaul communication, a signal in a downlink (link from a network toward equipment) is transferred from an IAB donor to an IAB node, and when a plurality of IAB nodes are series-connected, the signal is sequentially relayed from a parent node to a child node. Also, in backhaul communication, when a plurality of IAB nodes are series-connected, a signal in an uplink (link from equipment toward a network) is sequentially relayed from a child node to a parent node and transferred up to an IAB donor. Note that a "parent node" means an IAB donor or IAB node on the upstream side (side close to a core network) on a communication path, and a "child node" means an IAB node on the downstream side (side far from a core network) on a communication path, as described above. For example, when viewed from the IAB node 104, the IAB donor 102 is a parent node and the IAB nodes 105 and 106 are child nodes. Also, when viewed from the IAB node 106, the IAB node 104 is a parent node and the IAB node 107 is a child node. Note that when viewed from the IAB node 107, the IAB node 106 is a parent node, and no child node exists. In the following description, one or more IAB nodes included in a communication path from an IAB donor to an IAB node having no child node will be sometimes called IAB nodes under the IAB donor. In the example of Fig. 1, the IAB nodes 104 to 107 exist under the IAB donor 102, and the IAB nodes 110 and 111 exist under the IAB donor 103. An IAB donor can provide a connection to a core network to an IAB node under the IAB donor via backhaul communication.

Note that an IAB donor can communicate with another IAB donor without intervention of a core network. In this case, the Xn interface defined in the 3GPP standard TS38.420 is established between the IAB donors that communicate without intervention of a core network. This embodiment assumes that the Xn interface is established between the IAB donors 102 and 103 and these IAB donors can communicate with each other without intervention of a core network.

Each IAB node (and IAB donor) can form a cell, establish an access line between the IAB node and equipment, and provide communication services to the equipment. The example in Fig. 1 shows a state in which the IAB node 107 forms the area 108 and can provide communication services to the equipment 109 staying in the area 108. Note that "equipment" is, for example, User Equipment (UE). Equipment staying in an area provided by an IAB node can connect to an IAB donor and a core network via backhaul communication.

As described above, each IAB donor constitutes an IAB network using one or more IAB nodes under the IAB donor, and provides communication services to equipment. Note that Radio Access Technology (RAT) used by IAB is, for example, the Fifth Generation (5G) New Radio (NR), and an IAB donor and an IAB node can be called gNodeB (gNB). However, this is merely an example. For example, RAT of the next generation after 5G may be used, another RAT such as Long Term Evolution (LTE) may be used, and an IAB donor and an IAB node may be handled as nodes with names corresponding to the RAT. The discussions in this embodiment are applicable to an arbitrary wireless communication system in which a relay transmission path is formed, other than a cellular communication system, and a communication apparatus belonging to the wireless communication system.

### (Apparatus Configuration)

Subsequently, an example of the configuration of an IAB donor (IAB donors 102 and 103) will be explained. Note that in the following description, the IAB donors 102 and 103 will be simply called "IAB donors" when the IAB donors 102 and 103 need not be distinguished.

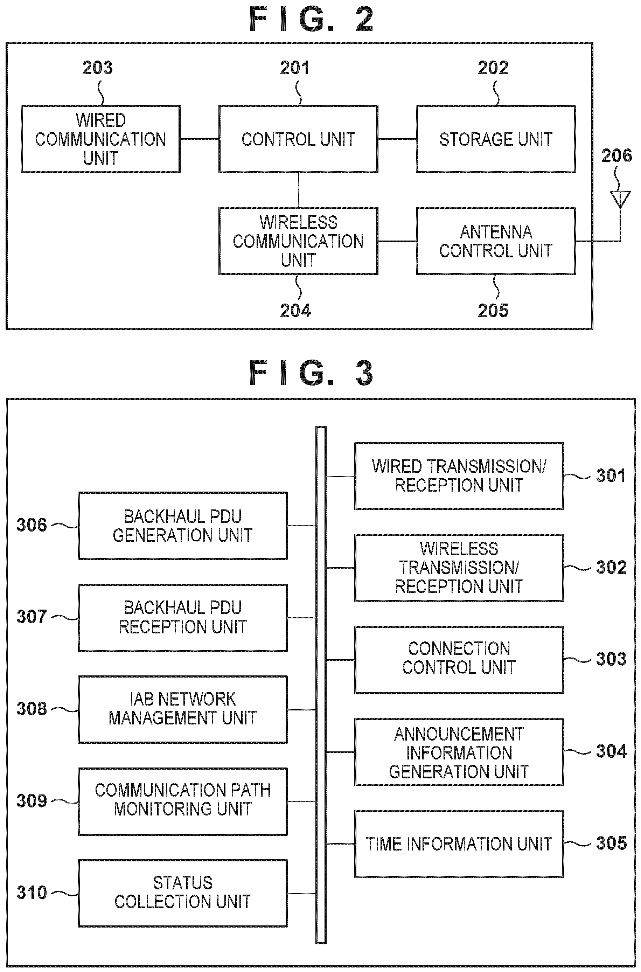

Fig. 2 shows an example of the hardware configuration of an IAB donor. The IAB donor includes, for example, a control unit 201, a storage unit 202, a wired communication unit 203, a wireless communication unit 204, an antenna control unit 205, and an antenna 206. Note that this configuration is merely an example, and the IAB donor may include another configuration completely different from that in Fig. 2, the configuration example in Fig. 2 may include additional components, or components included in the configuration example in Fig. 2 may be omitted.

The control unit 201 is constituted including one or more processors such as a CPU and an MPU. Note that the CPU stands for Central Processing Unit, and the MPU stands for Micro Processing Unit. In an example, the control unit 201 can be constituted by a plurality of processors such as a multicore processor. The control unit 201 controls the overall apparatus by executing, for example, a control program stored in the storage unit 202. Note that the control unit 201 may be constituted including a Field Programmable Gate Array (FPGA), a Digital Signal Processor (DSP), an Application Specific Integrated Circuit (ASIC), or the like. The storage unit 202 is constituted including one or more memories such as a ROM and a RAM. Note that the ROM stands for Read Only Memory, and the RAM stands for Random Access Memory. The storage unit 202 stores, for example, control programs that are executed by the control unit 201, and information about wireless communication such as cell information and information of connected equipment. The storage unit 202 further stores various kinds of information about IAB such as routing information and address information of an IAB network. Note that various operations to be described below can be implemented by executing, for example, a control program stored in the storage unit 202 by the control unit 201.

The wired communication unit 203 is constituted including a communication circuit and interface for executing wired communication between the IAB donor and the CN 101 or another IAB donor. The wireless communication unit 204 is constituted including a communication circuit and the like for executing wireless communication compliant with cellular communication standards such as 3GPP LTE and 5G. Note that the wireless communication unit 204 may be constituted including, for example, a communication circuit that can operate in compliance with communication standards such as wireless Local Area Network (LAN), other than cellular communication standards. The antenna control unit 205 controls the antenna 206 for wireless communication performed by the wireless communication unit 204. The antenna 206 has characteristics capable of receiving a signal of a frequency band used in wireless communication executed by the wireless communication unit 204, and outputting a signal of the frequency band.

Fig. 3 is a block diagram showing an example of the functional configuration of the IAB donor. The IAB donor includes, as functional components, for example, a wired transmission/reception unit 301, a wireless transmission/reception unit 302, a connection control unit 303, an announcement information generation unit 304, and a time information unit 305. The IAB donor can further include a backhaul PDU generation unit 306, a backhaul PDU reception unit 307, an IAB network management unit 308, a communication path monitoring unit 309, and a status collection unit 310.

The wired transmission/reception unit 301 transmits/receives various signals such as a frame and information between the IAB donor and the CN 101 or another IAB donor via the wired communication unit 203 in Fig. 2. The wireless transmission/reception unit 302 transmits/receives various signals via the wireless communication unit 204 in Fig. 2 to/from an IAB node connected under the IAB donor and a communication apparatus such as equipment connected to the IAB node. The connection control unit 303 performs connection control with another communication apparatus by communication via the wireless transmission/reception unit 302. The connection control unit 303 transmits/receives, for example, a Radio Resource Control (RRC) message via the wireless transmission/reception unit 302, and executes processing regarding connection and disconnection to and from another communication apparatus. The announcement information generation unit 304 generates announcement information such as system information regarding a cell provided by the IAB donor itself. The IAB donor periodically transmits announcement information via the wireless transmission/reception unit 302 without designating a destination. Note that even announcement information transmitted by an IAB node under the IAB donor can also be generated by the announcement information generation unit 304. Note that announcement information transmitted by an IAB node under the IAB donor may be generated by the IAB node under the IAB donor. Another communication apparatus (equipment or a communication apparatus capable of functioning as an IAB node) can receive the announcement information to recognize that an IAB donor or an IAB node exists around the communication apparatus, and perform connection processing to the IAB donor or the IAB node. The time information unit 305 executes obtainment of time information via a network, measurement by timer processing till predetermined time, and the like.

The backhaul PDU generation unit 306 generates Protocol Data Unit (PDU) based on Backhaul Adaptation Protocol (BAP) that is exchanged between communication apparatuses in backhaul communication. Data transfer and notification of a control message in backhaul communication are performed using the PDU. The PDU is transmitted to another communication apparatus via the wireless transmission/reception unit 302 or received from another communication apparatus. The PDU is constituted including a BAP header, and a payload in which data to be transferred and a control message are stored, and the BAP address of the destination of the PDU is designated in the BAP header. An IAB donor that manages an IAB network uniquely assigns a BAP address to an IAB node constituting the IAB network. That is, the BAP address of the destination designates an IAB node to which the PDU is transferred. The backhaul PDU reception unit 307 analyzes a PD received via the wireless transmission/reception unit 302 from an IAB node under the IAB donor.

The IAB network management unit 308 manages an IAB network constituted including an IAB node under the IAB donor. The IAB network management unit 308 designates a BAP address to each IAB node under the IAB donor, and sets a communication path (routing) from the IAB donor to an IAB node at a communication destination. Also, the IAB network management unit 308 changes the shape (topology) of a communication path defined by connecting an IAB node to a given parent node, and executes connection determination and operation setting of a boundary IAB node (to be described later).

The communication path monitoring unit 309 monitors, via the wireless transmission/reception unit 302, a communication path up to a specific IAB node within an IAB network managed by the IAB donor itself. For example, the communication path monitoring unit 309 transmits, to each IAB node constituting a communication path monitored by the IAB donor itself, a confirmation message to confirm the free space of a communication buffer, and grasps the free space of the communication buffer of each IAB node. When the IAB node notifies the IAB donor of the free space of the communication buffer, a flow control feedback message defined by BAP can be used. Note that when there is an IAB node from which a response to the confirmation message cannot be obtained, the communication path monitoring unit 309 can determine that a Radio Link Failure (RLF) has occurred on a communication path including the IAB node.

The status collection unit 310 obtains, from another IAB donor via the wired transmission/reception unit 301, a communication path status information notification obtained by the IAB donor. That is, the status collection unit 310 obtains, from another IAB donor, status information about a communication path under the management of the other IAB donor. The status collection unit 310 can transmit, to another IAB donor, a request message that requests status information of a communication path, and obtain, as a response to the request message, status information about a communication path under the management of the other IAB donor. Note that when the IAB donor receives a request message from another IAB donor, the IAB donor notifies the IAB donor serving as the request message transmission source of the communication path status information obtained by the communication path monitoring unit 309.

Note that an IAB donor is constituted by two units, that is, a Central Unit (CU) and a Distributed Unit (DU). Note that an IAB node is constituted including a Mobile Termination (MT) connected as equipment to a parent node, and a DU. That is, both an IAB donor and an IAB node include DUs, but a "DU" in the following description means the DU of an IAB donor. The CU controls the DU to support the protocol of an upper layer in wireless communication. For example, the CU supports Packet Data Convergence Protocol (PDCP) and Service Data Adaptation Protocol (SDCP) used for communication with equipment. The CU can also support User Datagram Protocol (UDP), Stream Control Transmission Protocol (SCTP), and IP used for communication with the CN 101 or another IAB donor. The CU further assigns a BAP address to the DU within the IAB donor. The DU supports the protocols of the Radio Link Control (RLC) layer, physical layer, and Medium Access Control (MAC) layer that are the protocols of lower layers in wireless communication. The CU and the DU may be arranged in independent apparatuses. In this case, the apparatuses can be connected by a wired IP network.

### (Processing Sequence)

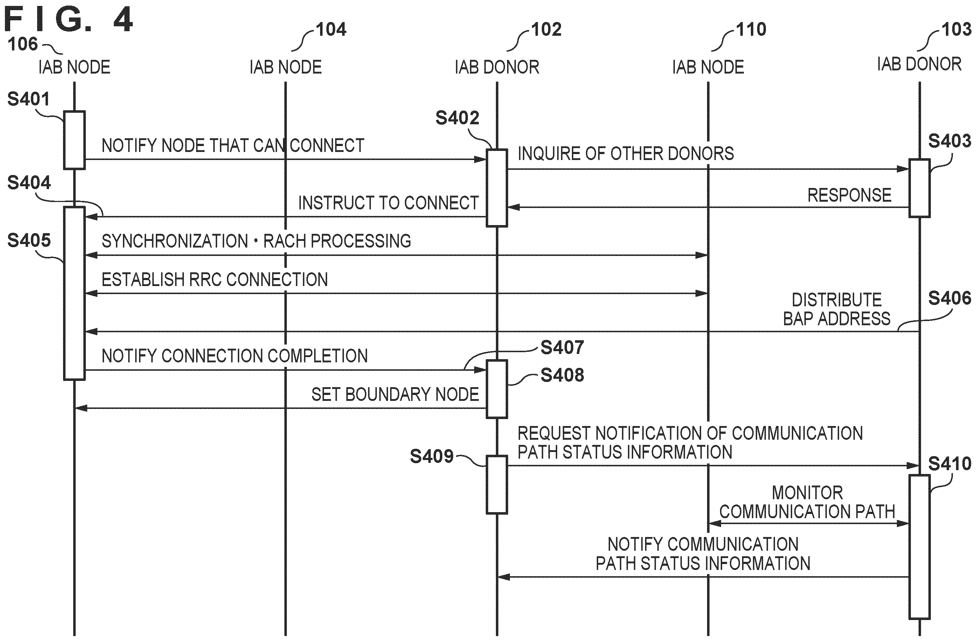

An example of the sequence of processing when the IAB node 106 operates as a boundary IAB node in the wireless communication system of Fig. 1 will be explained with reference to Fig. 4. Note that the IAB donor 102 performs backhaul communication with the IAB nodes 104 and 106, and the IAB donor 103 performs backhaul communication with the IAB node 110. The IAB donor 102 establishes, for example, the Xn interface with the IAB donor 103 and can directly communicate with it.

First, the IAB node 106 receives announcement information of the IAB node 110 and detects that the IAB node 106 can also connect to the IAB node 110 (S401). Then, the IAB node 106 uses, for example, identification information (gNB ID) of a base station device (IAB node) included in the received announcement information to notify the IAB donor 102 that the IAB node 110 is detected. That is, the IAB node 106 notifies the IAB donor 102 of the presence of the connectable IAB node. The IAB donor 102 determines whether, when the IAB node 106 connects to the notified IAB node 110, the IAB node 106 can operate as a boundary IAB node (S402). To effectively operate the IAB node 106 as a boundary IAB node, it is important that an IAB donor that manages the IAB node 110, and the IAB donor 102 can directly communicate with each other. Thus, the IAB donor 102 inquires, of all or some IAB donors with which direct communication is possible (for example, with which the Xn interface is established), whether the IAB node 110 is included in IAB nodes under the IAB donor. In this embodiment, the IAB donor 102 can directly communicate with the IAB donor 103 and makes an inquiry to the IAB donor 103.

Upon receiving the inquiry, the IAB donor 103 checks whether the IAB node 110 is included in an IAB network managed by the IAB donor 103 (S403). The IAB donor 103 notifies the IAB donor 102 using a response message that the IAB node 110 is included in the IAB network. Note that when the IAB node 110 is not included in the IAB network managed by the IAB donor 103, the IAB donor 103 may transmit, to the IAB donor 102, a response representing that the IAB node 110 does not exist under the IAB donor 103, or may not transmit a response. Upon receiving a response from the IAB donor 103, the IAB donor 102 can recognize that the IAB node 110 exists under the IAB donor 103 with which direct communication is possible. Based on this recognition, the IAB donor 102 can specify that the IAB node 106 can operate as a boundary IAB node. In this embodiment, the IAB donor 102 decides to operate the IAB node 106 as a boundary IAB node, and transmits a connection instruction message to the IAB node 106 to instruct the IAB node 106 to connect to the IAB node 110 (S404).

Upon receiving the connection instruction message, the IAB node 106 executes connection processing to the IAB node 110 (S405). For example, the IAB node 106 receives a downlink sync signal from the IAB node 110 to establish synchronization of the downlink, and then executes random access processing (RACH processing) to establish synchronization of the uplink. After that, the IAB node 106 transmits/receives RRC messages to/from the IAB node 110, and establishes a connection in the RRC layer. After establishing a connection to the IAB node 110, the IAB node 106 receives assignment of a BAP address from the IAB donor 103 that controls the IAB node 110 (S406). Note that the IAB node 106 also receives assignment of a BAP address from the IAB donor 102. Therefore, the IAB node 106 has two corresponding BAP addresses in two or more IAB networks in which the IAB node 106 joins. Note that an IAB network (IAB network managed by the IAB donor 102) in which the IAB node 106 joins from the beginning will be sometimes called a main network. An IAB network (IAB network managed by the IAB donor 103) in which the IAB node 106 additionally joins will be sometimes called a subnetwork. Note that the main network can be an IAB network managed by an IAB donor that controls the IAB node 106. That is, when the IAB node 106 becomes controlled by the IAB donor 103 that manages the IAB network in which the IAB node 106 additionally joins, the IAB network managed by the IAB donor 103 can be handled as a main network.

Upon establishing a connection to the IAB node 110 and receiving assignment of a BAP address from the IAB donor 103, the IAB node 106 transmits, to the IAB donor 102, a connection completion notification representing that the connection processing to the IAB donor 103 is completed (S407). The connection completion notification includes, for example, the BAP address assigned from the IAB donor 103 to the IAB node 106. Upon receiving the connection completion notification, the IAB donor 102 performs setting of a boundary IAB node with respect to the IAB node 106 (S408). When a boundary IAB node receives a packet having, as a destination, a BAP address assigned from an IAB donor that manages a subnetwork, the boundary IAB node rewrites the destination BAP address of the packet to the BAP address of a main network and then transfers the packet to a lower node. In the setting of a boundary IAB node, setting for the transfer is performed. In this embodiment, when the IAB node 106 receives a packet having, as a destination, a BAP address assigned from the IAB donor 103 to the IAB node 106, setting for rewriting the destination BAP address to the BAP address of the IAB node 107 and transferring the packet is performed. Upon completion of this setting, the IAB node 106 starts operating as a boundary node.

Note that a BAP address in the subnetwork may be assigned to even the IAB node 107 connected on the downstream side of the IAB node 106. In this case, when the destination of a signal is the BAP address of the main network or subnetwork of the IAB node 106, the IAB node 106 can process the signal within the IAB node 106. In contrast, when the destination of a signal is the BAP address of the main network or subnetwork of the IAB node 107, the IAB node 106 can transfer the signal to the IAB node 107. That is, when the BAP address of the subnetwork is assigned to even the IAB node 107, the destination BAP address need not be rewritten within the IAB node 106. Note that when the BAP address of the IAB node 107 in the subnetwork is designated as a destination BAP address, the IAB node 106 may rewrite the destination BAP address to the BAP address of the IAB node 107 in the main network. Note that the BAP address of the IAB node 106 may be set as a destination in the subnetwork regardless of which of the IAB nodes 106 and 107 is the destination. In an example, information representing which of the IAB nodes 106 and 107 is the destination can be included in a signal. For example, a signal can be generated in which a signal including the BAP address of the IAB node 106 or 107 in the main network is included in a payload and the BAP address of the IAB node 106 in the subnetwork is designated as the destination. In this case, when the IAB node 106 receives this signal, it may extract only the payload portion and handle the signal stored in the payload portion as a signal arriving at the main network.

When the IAB donor 102 communicates using only the IAB network managed by the IAB donor 102 itself in transmitting data to the IAB node 107, the IAB donor 102 generates a signal whose destination is the BAP address of the IAB node 107. Then, the IAB donor 102 transmits the signal to the IAB node 104. The transmitted signal is transferred to the IAB node 107 via the IAB nodes 104 and 106. To the contrary, when the IAB donor 102 transmits data to the IAB node 107 via the IAB network managed by the IAB donor 103, the IAB donor 102 generates a signal whose destination is the BAP address of the IAB node 106 assigned from the IAB donor 103. The IAB donor 102 then transmits the signal to the IAB donor 103. More specifically, the IAB donor 102 transmits the generated signal to the DU of the IAB donor 103. The transmitted signal is transferred to the IAB node 106 via the IAB donor 103 and the IAB node 110. Upon receiving the signal, the IAB node 106 rewrites the destination BAP address to the BAP address of the IAB node 107, and transfers the signal finally to the IAB node 107. In this manner, the IAB node 106 operates as a boundary node so that a communication path from the IAB donor 102 to the IAB node 106 or another IAB node connected on the downstream side of the IAB node 106 can be selected.

Referring back to Fig. 4, the IAB donor 102 transmits a communication path status information notification request to the IAB donor 103 by using the status collection unit 310 (S409). The IAB donor 102 monitors the communication path from the IAB donor 102 to the IAB node 106 (boundary IAB node) by using the communication path monitoring unit 309, and collects status information of the communication path. Similar to the IAB donor 102, the IAB donor 103 monitors the communication path from the IAB donor 103 to the IAB node 106 (boundary IAB node) by using the communication path monitoring unit 309, and collects status information of the communication path. Note that in this embodiment, a case where each IAB donor monitors a communication path to a boundary IAB node has been exemplified. However, the IAB donor can monitor another communication path such as a communication path including an IAB node connected on the downstream side of the boundary IAB node. When the IAB donor 103 receives a communication path status information notification request, it notifies the IAB donor 102 serving as the information request source of status information of the communication path from the IAB donor 103 to the IAB node 106 (S410). In this way, the IAB donor 102 that manages the main network can obtain information representing the environment of the communication path to the boundary IAB node in the subnetwork. For example, when the communication environment of the second communication path from the IAB donor 103 to the IAB node 106 is better than that of the first communication path from the IAB donor 102 to the IAB node 106, the IAB donor 102 can decide to use the second communication path. Accordingly, efficient communication can be executed when a boundary IAB node exists.

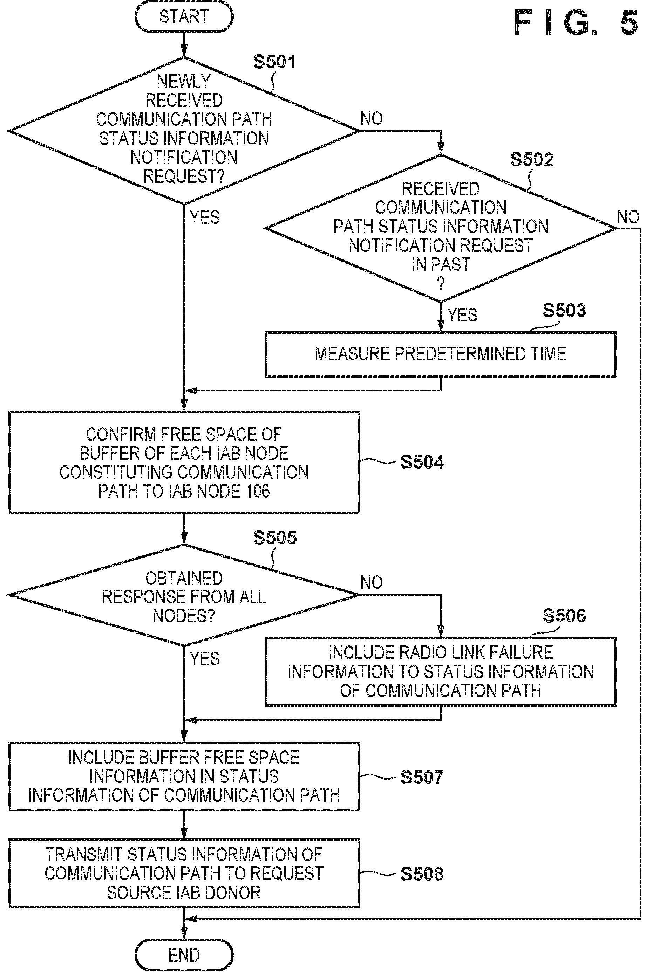

Subsequently, an example of the sequence of processing of announcing status information of a communication path by the IAB donor 103 will be explained with reference to Fig. 5. This processing corresponds to, for example, the processing executed in S410 of Fig. 4.

First, the IAB donor 103 determines whether it has newly received a communication path status information notification request (step S501). If the IAB donor 103 has newly received a notification request (YES in step S501), it advances the process to step S504. If the IAB donor 103 has not newly received a notification request (NO in step S501), it determines whether it received a notification request in the past (step S502). If the IAB donor 103 did not receive a notification request even in the past (NO in step S502), it directly ends the process. If the IAB donor 103 received a notification request in the past (YES in step S502), it controls the time information unit 305 to measure the time until the time after, for example, receiving the notification request in the past or announcing information last time reaches a predetermined time (step S503). The predetermined time may be, for example, a time set in advance in the IAB donor 103 or a time designated by another IAB donor (for example, the IAB donor 102). Note that the predetermined time may be set for each boundary IAB node. If the elapsed time reaches the predetermined time, the IAB donor 103 advances the process to step S504. Note that notification of communication path status information is performed in processes in step S504 and subsequent steps, which will be described later. If the IAB donor 103 receives a communication path status information notification request (YES in step S501), it notifies the IAB donor 102 of the information in a predetermined cycle (YES in step S502, and step S503).

Note that even in a state in which the IAB donor 103 has not received a communication path status information notification request, it may notify the IAB donor 102 of status information. For example, the IAB donor 103 can be constituted to notify the IAB donor 102 of status information at predetermined time. Note that the IAB donor 103 may be constituted to repetitively notify the IAB donor 102 of status information in a predetermined cycle regardless of the first trigger of notification of status information.

In step S504, the IAB donor 103 controls the communication path monitoring unit 309 to confirm the free space of the buffer of each IAB node constituting a communication path from the IAB donor 103 to the IAB node 106. For example, the IAB donor 103 requests, of the IAB node 110, a report about the buffer free space, receives the report, and can confirm the buffer free space of each IAB node. For example, in response to reception of the request message from the IAB donor 103, the IAB node 110 transmits a message that reports the free space of the communication buffer. The message that reports the free space of the communication buffer can be, for example, a flow control feedback message defined by BAP. For example, in a predetermined period, the IAB donor 103 waits for responses each including a report from all target IAB nodes for which the free space of the communication buffer is confirmed (step S505).

If the IAB donor 103 has not received a response from one or more IAB nodes (NO in step S505), it can determine that an RLF has occurred in a link until the response reaches the IAB node because it can be assumed that owing to the RLF, the request message has not reached the IAB node or the response has not reached the IAB donor 103. If the IAB donor 103 determines that the RLF has occurred, it includes, in communication path status information, information representing that the RLF has occurred (step S506), and advances the process to step S507. If the IAB donor 103 has received responses from all IAB nodes (YES in step S505), it advances the process to step S507 without performing the processing in step S506. In step S507, the IAB donor 103 includes buffer free space information in the communication path status information based on the flow control feedback message notified from each IAB node. Then, the IAB donor 103 transmits the communication path status information to the IAB donor serving as the notification request source (step S508), and ends the process. Note that the IAB donor 103 can return the process to step S501 after transmitting the communication path status information.

Note that a case where the IAB donor 103 periodically notifies an IAB donor serving as a notification request source of communication path status information has been exemplified in the above-described processing example, but the present invention is not limited to this. For example, the IAB donor 103 may perform the notification only when the buffer free space of an IAB node included in a communication path from the IAB donor 103 to a boundary IAB node is confirmed to be lower than a predetermined buffer capacity. That is, a predetermined event may be defined, and only when the predetermined event occurs, the notification may be performed. This can suppress the amount of information transmitted/received between IAB donors. The IAB donor 103 may specify only whether an RLF has occurred on a communication path to a boundary IAB node, and notify an IAB donor serving as the notification request source of the specifying result.

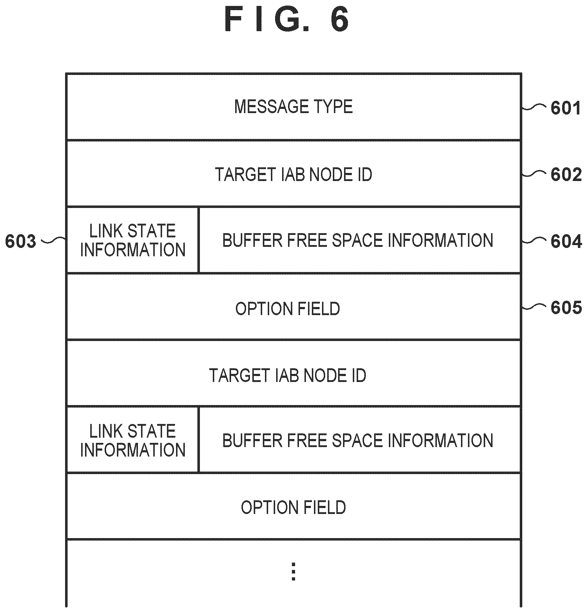

Fig. 6 shows an example of the structure of a message used to transmit communication path status information. In an example, communication path status information is included in a message transmitted/received on the Xn interface. That is, communication path status information can be transmitted by a message based on Xn application protocol (XnAP) defined in 3GPP TS38.423. However, the present invention is not limited to this. For example, communication path status information may be notified by a message used in a generally widely used protocol such as a UDP/IP packet.

A message for transmitting communication path status information is constituted including, for example, the fields of a message type 601, a target IAB node ID 602, link state information 603, buffer free space information 604, and an option 605. Note that the target IAB node ID 602, the link state information 603, the buffer free space information 604, and the option 605 are prepared for each target IAB node that is notified of the free space of the communication buffer. That is, when a plurality of target IAB nodes exist, the target IAB node ID 602, the link state information 603, the buffer free space information 604, and the option 605 can be repeated by the number of target IAB nodes.

The message type 601 is a field, only one of which is included in a message, and represents the type of information transmitted by the message. The message type 601 is, for example, a 4-octet (32-bit) field. In this embodiment, a value representing communication path status information is stored in this field. The target IAB node ID 602 is, for example, a 4-octet field, and stores the identifier of an IAB node in order to represent the IAB node regarding the subsequent link state information 603, buffer free space information 604, and option 605. The link state information 603 is, for example, a 1-octet field, and stores a value representing the state of a link between the IAB donor that transmits the message, and an IAB node represented by the target IAB node ID 602. The link state information 603 can store information capable of specifying whether the IAB donor serving as the transmission source of the message can communicate with the target IAB node (whether an RLF has occurred in a radio link to the IAB node). The IAB donor may specify the reliability of a link based on, for example, the past RLF occurrence frequency, and store, in the link state information 603, information representing the reliability of the link. The buffer free space information 604 is, for example, a 3-octet field, and stores a value representing, by a predetermined unit (for example, kilobyte unit), a currently available communication buffer capacity at an IAB node represented by the target IAB node ID 602.

The option 605 is a field available for storing other information. For example, an IAB donor can measure the time until a packet transmitted from the IAB donor reaches a target IAB node, and use the option 605 to notify information representing the time obtained by the measurement. The IAB donor may store, in the option 605, information representing the radio field intensity of a radio wave transmitted from a parent node that is measured at a target IAB node. Note that the target IAB node can be constituted to, for example, measure the above-mentioned time and radio field intensity and notify the IAB donor of the measurement result.

Note that a case where both the link state information 603 and the buffer free space information 604 are included in a message has been exemplified in the above-described example, but only either of them may be included. If unnecessary, the option 605 can be omitted. The alignment order of a plurality of information fields in the above-described example may be changed. The size of each field described above is merely an example. That is, a message of an arbitrary format capable of notifying similar information can be used. Some fields may be omitted, as needed.

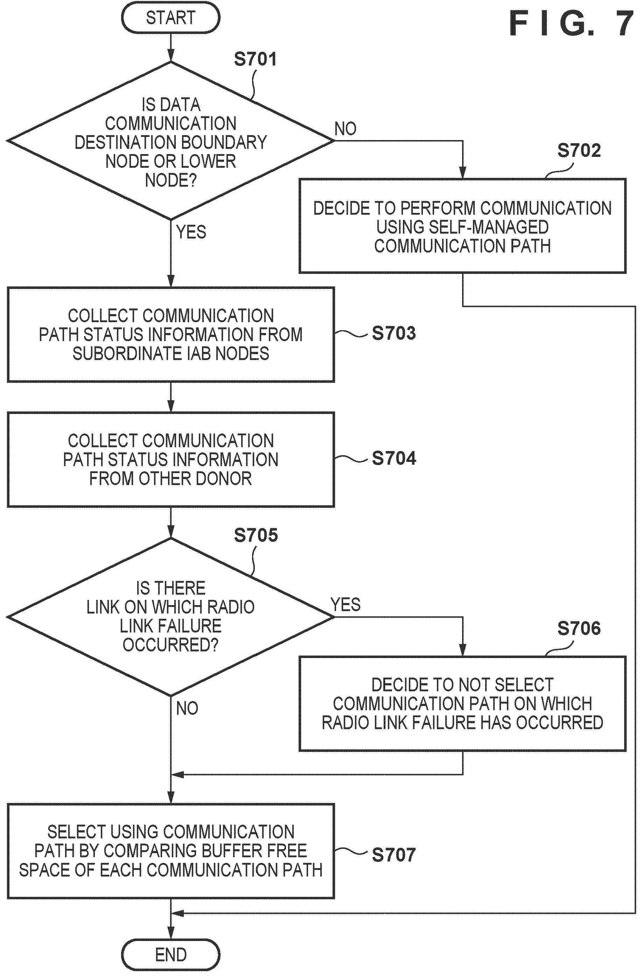

Subsequently, an example of processing of selecting a communication path by the IAB donor 102 will be explained with reference to Fig. 7. The IAB donor 102 selects a communication path by the processing in Fig. 7, generates a signal (PDU) in which a destination BAP address to use the selected communication path is set, and transmits the signal. For example, when the IAB donor 102 decides to transmit the signal via a subnetwork, it transmits the generated signal to the IAB donor 103. When the IAB donor 102 decides to transmit the signal via a main network, it can transmit the generated signal to the IAB node 104 under the IAB donor 102.

The IAB donor 102 determines whether the destination of data to be transmitted is a boundary IAB node or an IAB node connected on the downstream side of a boundary IAB node such as a child node (step S701). In an example, the IAB donor 102 can execute the determination in step S701 by regarding, as the destination of signal transfer by BAP, an IAB node connected to equipment serving as the final destination of data. However, the present invention is not limited this. For example, when controlling an IAB node under the IAB donor 102, the IAB donor 102 may execute the determination in step S701 by regarding, as the IAB node, the transmission destination of a message for the control. Note that the IAB donor 102 may determine whether an IAB node serving as the transmission source of data on an uplink is a boundary IAB node or an IAB node connected on the downstream side of a boundary IAB node such as a child node.

If the IAB node serving as the destination of data is not a boundary IAB node or an IAB node on the downstream side of a boundary IAB node (NO in step S701), the IAB donor 102 decides to perform communication using only a communication path managed by the IAB donor 102 (step S702). That is, when the IAB node serving as the destination of data is not a boundary IAB node or an IAB node on the downstream side of a boundary IAB node, there is no available subnetwork for the destination IAB node, and a communication path in one set IAB network is used.

In contrast, if the IAB donor 102 determines that the IAB node serving as the destination of data is a boundary IAB node or an IAB node on the downstream side of a boundary IAB node (YES in step S701), it determines which of the main network and the subnetwork is used. For this purpose, first, the IAB donor 102 controls the communication path monitoring unit 309 to collect pieces of status information of communication paths from IAB nodes under the IAB donor 102 (step S703). In the example of Fig. 1, the IAB donor 102 controls the communication path monitoring unit 309 to collect pieces of information by causing the IAB nodes 104 and 106 to report pieces of status information of communication paths. Also, the IAB donor 102 controls the status collection unit 310 to collect pieces of status information of communication paths from another IAB donor that manages another IAB network (subnetwork) in which a boundary IAB node joins (step S704). In the example of Fig. 1, the IAB donor 102 transmits a request message to the IAB donor 103 to collect, via the IAB donor 103, pieces of status information of communication paths at the IAB nodes 110 and 106 under the IAB donor 103. Note that the IAB donor 102 may execute the information collection in steps S703 and S704 at timings other that the above-described timings, for example, before determining in step S701 that the destination of data is a boundary IAB node. Alternatively, the IAB donor 102 may perform the information collection, for example, periodically. The IAB donor 102 may use information obtained when the processing in Fig. 7 was executed last time. Note that the IAB donor 102 may store, for example, even information of the time when information was obtained, and upon the lapse of a predetermined period after the information was obtained, perform the information collection at the timings of steps S703 and S704.

After collecting pieces of status information of communication paths, the IAB donor 102 determines based on the pieces of information whether there is a communication path on which an RLF has occurred (step S705). If there is a communication path on which an RLF has occurred (YES in step S705), the IAB donor 102 does not select the communication path on which the RLF has occurred, uses another communication path, and advances the process to step S707 (step S706). In an example, the IAB donor 102 can register, in a blacklist, the communication path on which the RLF has occurred, or exclude it from communication path candidates to be used so that the communication path on which the RLF has occurred does not become a choice in subsequent selection processing. If there is no communication path on which an RLF has occurred (NO in step S705), the IAB donor 102 determines that all communication paths are available, and advances the process to step S707 without performing additional processing.

In step S707, the IAB donor 102 selects a communication path used to transmit data. For example, the IAB donor 102 can select a communication path in which the buffer free space is larger in the pieces of status information of communication paths collected in steps S703 and S704. For example, the IAB donor 102 can select a communication path based on the minimum value of the buffer free space of an IAB node included in each communication path so as to preferentially select a communication path having a larger minimum value. Also, the IAB donor 102 may select one of communication paths capable of satisfying a communication capacity requested in data communication. Alternatively, the IAB donor 102 may decide to, for example, use a plurality of communication paths. In this case, when the IAB donor 102 concurrently uses a plurality of communication paths, it can select a combination of communication paths capable of satisfying a requested communication capacity. In the example of Fig. 1, the IAB donor 102 selects communication paths based on the sizes of the buffer free spaces of the IAB nodes 104 and 110. Then, the IAB donor 102 performs communication using the selected communication paths.

As described above, an IAB donor collects pieces of status information of communication paths from another IAB donor, and can select a communication path not only from communication paths managed by the IAB donor but also from communication paths managed by the other IAB donor. Communication effectively using a boundary IAB node can therefore be executed.

In the above-described embodiment, a case where a communication path to be used is selected from two communication paths has been explained. However, similar discussions are applicable to even a case where there is a communication path by still another IAB donor. Also, in the above-described embodiment, a case where a communication path is based on whether an RLF has occurred, and the free space of the communication buffer has been explained. However, for example, a value stored in the field of the option 605 may be used as the communication path selection criterion. For example, when information of the time until a signal reaches a target IAB node from an IAB donor (that is, propagation of a signal) is stored in the field of the option 605, as described above, a communication path to be used may be selected based on the time information. In an example, when the free space of the communication buffer exceeds a predetermined value in any communication path, the IAB donor may preferentially select a communication path on which the time until a packet reaches a boundary IAB node from the IAB donor is shorter. Note that when a communication path is selected based on the time required for propagation of a signal, a value obtained by adding the time of propagation in a subnetwork and the time of propagation from an IAB donor in a main network to an IAB donor in the subnetwork may be defined as the time of propagation in the subnetwork. Also, for example, when the radio quality such as the radio wave reception intensity of a signal from a parent node at a target IAB node is included in the field of the option 605, a communication path to be used may be selected based on the information. For example, it is possible to select a communication path higher in minimum radio quality among communication paths from IAB donors to a boundary IAB node. For example, when both the free space of the communication buffer in a main network and that of the communication buffer in a subnetwork exceed a predetermined value, a communication path can be selected based on the radio quality. For example, a score may be applied to each communication path so that, for example, the score becomes higher for a larger free space of the communication buffer and the score also becomes higher for a shorter time till the arrival of a packet, and a communication path having a higher score may be preferentially selected. When the free space of the communication buffer exceeds a predetermined value and no RLF has occurred in a main network, a communication path in the main network may be used.

In the above-described embodiment, an example in which an IAB donor that controls a boundary IAB node selects a communication path to be used has been explained. However, the present invention is not limited to this. For example, which of IAB donors that respectively manage a communication path to which a boundary IAB node belongs selects a communication path to be used may be decided based on, for example, capability information of the IAB donors.

Note that in the above-described embodiment, a method of collecting pieces of status information of communication paths in an IAB-based relay transmission system has been explained. However, a similar method is also applicable to a relay transmission system other than IAB. That is, the above-described discussions are applicable when a relay device common to a plurality of communication paths is included for a plurality of communication paths managed by different control apparatuses. In this case, each control apparatus collects status information of a managed communication path, and pieces of status information about a plurality of communication paths are aggregated to at least one of the control apparatuses that respectively manage the plurality of communication paths including the common relay device. The control apparatus in which the pieces of status information are aggregated can properly select a communication path to be used in consideration of the states of the plurality of communication paths.

Note that the above-described status information may be used for a purpose other than selection of a communication path. For example, an IAB donor may use status information for processing of, for example, handing over, to an IAB donor belonging to a communication path not including a boundary IAB node, equipment connected to a boundary IAB node or an IAB node on the downstream side of the boundary IAB node. This can adjust the communication amount at the boundary IAB node so as to, for example, prevent the boundary IAB node from falling into an overload state. Also, for example, when a boundary IAB node can move, an IAB donor may use status information to adjust the position of the boundary IAB node. The communication quality at the boundary IAB node can become high in all communication paths, improving the communication quality of the boundary IAB node. In this fashion, status information can be used for various control operations regarding communication at a boundary IAB node.

The present invention can be implemented by processing of supplying a program for implementing one or more functions of the above-described embodiment to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-014440 filed February 1, 2022, which is hereby incorporated by reference herein.

## Claims

1. A control apparatus that functions as a donor of Integrated Access and Backhaul (IAB) which is a cellular communication standard defined by the Third Generation Partnership Project (3GPP), the apparatus comprising:
transmission means for, in a case where an IAB node joining in both a first network topology that is provided by another control apparatus different from the control apparatus and includes another IAB donor, and a second network topology including the IAB donor exists, transmitting, to the other IAB donor, an obtaining request to obtain status information regarding a communication path including at least the IAB node on the second network topology including the other IAB donor; and
reception means for receiving a response to the obtaining request.

2. The control apparatus according to claim 1, wherein the obtaining request is a request transmitted to the other IAB donor using Xn application protocol (XnAP).

3. A control apparatus that manages communication of a cellular communication standard defined by the Third Generation Partnership Project (3GPP), the apparatus comprising:
monitoring means for monitoring, of a first communication path managed by the control apparatus, a communication path from the control apparatus to a relay device included in the first communication path, and obtaining first status information regarding the communication path; and
obtaining means for, in a case where the relay device is included in a second communication path managed by another control apparatus different from the control apparatus, obtaining, from the other control apparatus, second status information regarding, of the second communication path, a communication path from the other control apparatus to the relay device.

4. The control apparatus according to claim 3, further comprising control means for controlling communication of the relay device based on the first status information and the second status information.

5. The control apparatus according to claim 3 or 4, wherein the obtaining means obtains the second status information by transmitting, to the other control apparatus, a message that requests the second status information.

6. The control apparatus according to any one of claims 3 to 5, wherein in a case where the control apparatus controls the relay device, the obtaining means obtains the second status information.

7. The control apparatus according to any one of claims 3 to 6, further comprising notification means for notifying the other control apparatus of the first status information.

8. The control apparatus according to claim 7, wherein in a case where a message that requests the first status information is received from the other control apparatus, the notification means notifies the other control apparatus of the first status information.

9. The control apparatus according to claim 7 or 8, wherein the notification means notifies the other control apparatus of the first status information in a predetermined cycle.

10. The control apparatus according to any one of claims 3 to 9, wherein the monitoring means transmits, to an apparatus included in the communication path from the control apparatus to the relay device on the first communication path, a message to confirm status information, receives a response to the message, and obtains the first status information.

11. The control apparatus according to any one of claims 3 to 10, wherein the first status information includes a free space of a communication buffer in an apparatus included in the communication path from the control apparatus to the relay device on the first communication path, and the second status information includes a free space of a communication buffer in an apparatus included in the communication path from the other control apparatus to the relay device on the second communication path.

12. The control apparatus according to any one of claims 3 to 11, wherein the first status information includes information capable of specifying whether a Radio Link Failure (RLF) has occurred in a link between the control apparatus and an apparatus included in the communication path from the control apparatus to the relay device on the first communication path, and
the second status information includes information capable of specifying whether an RLF has occurred in a link between the other control apparatus and an apparatus included in the communication path from the other control apparatus to the relay device on the second communication path.

13. The control apparatus according to any one of claims 3 to 12, wherein the first status information includes information representing a reception intensity of a radio wave in an apparatus included in the communication path from the control apparatus to the relay device on the first communication path, and the second status information includes information representing a reception intensity of a radio wave in an apparatus included in the communication path from the other control apparatus to the relay device on the second communication path.

14. The control apparatus according to any one of claims 3 to 13, wherein the first status information includes information representing a time required for propagation of a signal between the control apparatus and an apparatus included in the communication path from the control apparatus to the relay device on the first communication path, and the second status information includes information representing a time required for propagation of a signal between the other control apparatus and an apparatus included in the communication path from the other control apparatus to the relay device on the second communication path.

15. The control apparatus according to claim 4, wherein in a case where communication with the relay device or an apparatus connected on a side of the relay device far from the control apparatus on the first communication path is performed, the control means decides, based on the first status information and the second status information, whether to perform communication using a communication path between the other control apparatus and the relay device on the second communication path or perform communication without using the communication path.

16. The control apparatus according to claim 15, wherein in a case where the first status information represents a free space of a first communication buffer in an apparatus between the control apparatus and the relay device, and the second status information represents a free space of a second communication buffer in an apparatus between the other control apparatus and the relay device,
the control means decides, based on a fact that the free space of the first communication buffer is larger than the free space of the second communication buffer, to perform communication preferentially using a communication path between the control apparatus and the relay device on the first communication path, and
the control means decides, based on a fact that the free space of the first communication buffer is smaller than the free space of the second communication buffer, to perform communication preferentially using a communication path between the other control apparatus and the relay device on the second communication path.

17. The control apparatus according to claim 15, wherein in a case where the first status information represents a first reception intensity of a radio wave in an apparatus between the control apparatus and the relay device, and the second status information represents a second reception intensity of a radio wave in an apparatus between the other control apparatus and the relay device,
the control means decides, based on a fact that the first reception intensity is higher than the second reception intensity, to perform communication preferentially using a communication path between the control apparatus and the relay device on the first communication path, and
the control means decides, based on a fact that the first reception intensity is lower than the second reception intensity, to perform communication preferentially using a communication path between the other control apparatus and the relay device on the second communication path.

18. The control apparatus according to claim 17, wherein in a case where the first status information further represents a free space of a first communication buffer in an apparatus between the control apparatus and the relay device, the second status information further represents a free space of a second communication buffer in an apparatus between the other control apparatus and the relay device, and both the free space of the first communication buffer and the free space of the second communication buffer exceed a predetermined value, the control means makes a decision based on the first reception intensity and the second reception intensity.

19. The control apparatus according to claim 15, wherein in a case where the first status information represents a first time required for propagation of a signal between the control apparatus and an apparatus included in the communication path from the control apparatus to the relay device, and the second status information represents a second time required for propagation of a signal between the other control apparatus and an apparatus included in the communication path from the other control apparatus to the relay device,
the control means decides, based on a fact that the first time is shorter than the second time, to perform communication preferentially using the communication path between the control apparatus and the relay device on the first communication path, and
the control means decides, based on a fact that the first time is longer than the second time, to perform communication preferentially using the communication path between the other control apparatus and the relay device on the second communication path.

20. The control apparatus according to claim 19, wherein in a case where the first status information further represents a free space of a first communication buffer in an apparatus between the control apparatus and the relay device, the second status information further represents a free space of a second communication buffer in an apparatus between the other control apparatus and the relay device, and both the free space of the first communication buffer and the free space of the second communication buffer exceed a predetermined value, the control means makes a decision based on the first time and the second time.

21. The control apparatus according to any one of claims 15 to 20, wherein in a case where whether a Radio Link Failure (RLF) has occurred in a link between the control apparatus and an apparatus included in the communication path from the control apparatus to the relay device is specified by the first status information, and whether an RLF has occurred in a link between the other control apparatus and an apparatus included in the communication path from the other control apparatus to the relay device is specified by the second status information, the control means decides not to use the communication path on which the RLF has occurred.

22. The control apparatus according to any one of claims 15 to 21, wherein in a case where the first status information represents that a Radio Link Failure (RLF) has not occurred in a link between the control apparatus and an apparatus included in the communication path from the control apparatus to the relay device, and a free space of a communication buffer on the communication path exceeds a predetermined value, the control means decides to use the communication path between the control apparatus and the relay device on the first communication path.

23. The control apparatus according to any one of claims 3 to 22, wherein the control apparatus and the other control apparatus are IAB donors in Integrated Access and Backhaul (IAB) of the Third Generation Partnership Project (3GPP), and the relay device is an IAB node.

24. A control method executed by a control apparatus that manages communication of a cellular communication standard defined by the Third Generation Partnership Project (3GPP), the method comprising:
monitoring, of a first communication path managed by the control apparatus, a communication path from the control apparatus to a relay device included in the first communication path, and obtaining first status information regarding the communication path; and
in a case where the relay device is included in a second communication path managed by another control apparatus different from the control apparatus, obtaining, from the other control apparatus, second status information regarding, of the second communication path, a communication path from the other control apparatus to the relay device.

25. A program for causing a computer to function as a control apparatus defined in any one of claims 3 to 23.
